# EUROPÄISCHE PATENTSCHRIFT

(11) **EP 1 834 721 B1**
(45) Veröffentlichungstag und Bekanntmachung des Hinweises auf die Patenterteilung: **19.08.2009**
(21) Anmeldenummer: 07005253.5
(22) Anmeldetag: 14.03.2007
(51) Int. Cl.: B23D 45/10, B23D 59/00, B27B 5/075, B27G 19/10

(54) **Verfahren und Vorrichtung zur Ritztiefensteuerung für Vorritzsägen**
Method and device for scoring depth control for scoring saws
Procédé et dispositif destinés à la commande en profondeur de rayures pour scies circulaires

(30) Priorität: 15.03.2006 DE 102006012253
(43) Veröffentlichungstag der Anmeldung: 19.09.2007
(73) Patentinhaber: Otto Martin Maschinenbau GmbH & Co. KG, 87724 Ottobeuren (DE)
(72) Erfinder: Martin, Peter, 87700 Memmingen (DE)
(74) Vertreter: Pfister, Stefan Helmut Ulrich

(56) Entgegenhaltungen:
- WO-A-00/47377
- DE-A1- 2 820 539
- DE-A1- 3 716 086
- DE-A1- 4 329 968
- DE-A1- 19 520 108

## Beschreibung

Die Erfindung betrifft ein Verfahren gemäß dem Oberbegriff des Anspruchs 1 und eine Kreissäge gemäß dem Oberbegriff des Anspruchs 9.

Derartige Kreissägen mit stehendem oder verfahrendem Sägeblatt mit einem Vorritzaggregat, die ein auf einem Tisch aufliegendes oder horizontal bewegtes Werkstück schneiden, sind bekannt. Dabei sind solche Sägemaschinen bekannt, die ein Vorritzaggregat aufweisen, das ein oder zwei Vorritzsägeblätter aufweist. Dieses Vorritzaggregat dient dazu, eine auf dem Maschinentisch auf- beziehungsweise anliegende, zu sägende Platte vor dem durchtrennenden Schnitt auf derjenigen Seite einzuritzen, auf der beim durchtrennenden Schnitt das Hauptsägeblatt austritt. Die dabei entstehende Ritznute ist geringfügig breiter als die Schnittfuge, die beim durchtrennenden Schnitt entsteht und meist nur zwischen 0,5 mm und 2,0 mm tief. Bekannt ist auch, daß die Drehrichtung der Vorritzsägeblätter derjenigen des Hauptsägeblattes bevorzugt entgegengesetzt gerichtet ist. Durch den Ritzschnitt wird ein Ausreißen insbesondere beschichteter Platten beim durchtrennenden Sägeschnitt auf der Seite des austretenden Hauptsägeblattes vermieden. Als Werkzeuge zum Vorritzen sind im Stand der Technik zwei Arten gebräuchlich. Es sind sogenannte geteilte Vorritzsägeblätter, bestehend aus zwei voneinander definiert axial beabstandeten Vorritzsägeblättern gleichen Durchmessers bekannt. Die Breite der entstehenden Ritznute wird durch den Abstand der beiden Vorritzsägeblätter bestimmt.

Des Weiteren sind kegelförmig zulaufende Vorritzsägeblätter bekannt, die nur aus einem Sägeblatt bestehen, bei dem der Zahn mit steigendem Durchmesser spitz zuläuft. Das heißt, mit steigendem Durchmesser verringert sich die Breite des vorritzenden Zahnes. Die Breite der entstehenden Ritznute wird bestimmt durch die Eindringtiefe in die zu sägende Platte.

Prinzipbedingt werden die geteilten Vorritzsägeblätter sehr dünn ausgeführt, um eine möglichst dünne minimale Ritznutenbreite erreichen zu können. Durch die dadurch entstehende, sehr geringe Stärke des Sägeblattkörpers reagieren diese Vorritzsägeblätter sehr empfindlich auf große mechanische Beanspruchungen. Häufig führt dies zum Schwingen der Vorritzsägeblätter und damit zu einem unsauberen Schnitt.

Eine zu große mechanische Beanspruchung kann verhindert werden, indem die Ritznuttiefe und damit die Eindringtiefe der Vorritzsägeblätter in das Werkstück so gering wie möglich gehalten wird. In der Praxis wird daher die Einstellung des Überstandes der Vorritzsägeblätter über dem Tisch (was bei aufliegendem Werkstück genau der Ritznuttiefe entspricht) bestimmt durch die Unebenheit der Werkstücke. Da unebene Werkstücke nicht auf dem Tisch aufliegen, zumindest jedoch nicht über die gesamte Werkstückfläche auf dem Tisch aufliegen, das Vorritzsägeblatt beziehungsweise die Vorritzsägeblätter aber auch bei der maximalen Unebenheit noch eine Ritznute erzeugen müssen, ist eine unnötig große Einstellung des Überstandes notwendig, die bei aufliegendem Werkstück zu einer großen Ritznuttiefe und damit zu einer großen mechanischen Beanspruchung des Vorritzsägeblattes führt.

Wenn andererseits der Abstand des Werkstückes vom Tisch die eingestellte Ritznuttiefe übersteigt, verliert das Vorritzaggregat völlig seine Wirkung. In der Praxis soll dies häufig durch Andruckrollen auf der Oberseite des Werkstückes vermieden werden. Diese Ausführungsform hat sich jedoch als sehr umständlich und hinderlich erwiesen. Zudem ist bei dicken und sehr stabilen Werkstücken ein sehr großer Andruck erforderlich, der wiederum den Vorschub des Werkstückes erschwert. Im Übrigen wird durch die Andruckrollen der Gesamtaufwand für den Vorschub des Werkstückes erhöht, was auch zu erhöhten Kosten bei der Herstellung derartiger Maschinen führt. Auch die Störanfälligkeit im späteren Einsatz ist aufgrund der Vielzahl von Andruckrollen, die notwendig sind, erhöht.

Bei kegelförmig zulaufenden Vorritzsägeblättern besteht das Problem darin, daß sich mit variierendem Abstand gleichzeitig die Breite der Ritznute verändert. Eine unterschiedlich breite Ritznute führt aber garantiert in jedem Fall zu Qualitätsproblemen. Wenn die Ritznute schmäler wird als die Schnittfuge des Hauptsägeblattes, erzeugt dieses Ausrisse, welche sehr unschön sind und die zu Beanstandungen bezüglich der Qualität des Schnittes führen. Eine wesentlich breitere Ritznut führt ebenfalls zu sichtbaren Fugen, beispielsweise beim Bekleben der Schnittfläche mit einer Kante.

Aus dem Stand der Technik ist ein Verfahren zur Einstellung des Schnittes der Ritznut in einem an beziehungsweise auf einer Auflageebene an- beziehungsweise aufliegenden werkstück mit wenigstens einem Vorritzsägeblatt einer Kreissäge bekannt, wobei bei diesem Verfahren lediglich die Lage der Sägeblätter beziehungsweise deren Schnittbreite ermittelt wird.

Es ist weiterhin ein Verfahren zur Einstellung der Ritztiefe für ein Sägeblatt bekannt, bei dem ein Abtastelement auf einem Stapel von Werkstücken, beispielsweise auf einem Stapel von Platten aufliegt. Das Abtastelement gibt dabei aufgrund der Veränderungen der Oberfläche auf dem Stapel die Maßangaben für die Tiefe der Ritznut vor. Dadurch werden selbstverständlich entsprechende Ungenauigkeiten erzeugt, da die Oberfläche auf dem Stapel nicht identisch ist mit der Oberfläche, auf der auf der Auflage aufliegenden Platte. Hierdurch werden ebenfalls Ungenauigkeiten erzeugt, die zu einer ungenügenden Tiefe beziehungsweise ungenügenden Breite der Ritznut des Vorritzsägeblattes führen können.

WO 0047 377 offenbart ein Verfahren gemäß dem Oberbegriff des Anspruchs 1 und eine Kreissäge gemäß dem Oberbegriff des Anspruchs 9.

Aufgabe der Erfindung ist es, ausgehend vom Stand der Technik, ein Verfahren zur Einstellung der Schnittiefe der Ritznute in einem an beziehungsweise auf einer Auflageebene an- beziehungsweise aufliegenden Werkstück zur Verfügung zu stellen, welches die vorher geschilderten Probleme des Standes der Technik nicht mehr aufweist.

Aufgabe der Erfindung ist es auch, eine Kreissäge mit einem Vorritzsägeaggregat zur Verfügung zu stellen, das eine Ritznut mit einer über das gesamte Werkstück gleichbleibenden Tiefe und Breite erzeugt.

Die Aufgabe der Erfindung wird gelöst durch ein Verfahren zur Einstellung der Schnittiefe der Ritznute in einem an beziehungsweise auf einer Auflageebene an- beziehungsweise aufliegenden Werkstück wenigstens eines Vorritzsägeblattes einer Kreissäge, wobei der Abstand des Werkstückes zu der Auflageebene permanent gemessen beziehungsweise überwacht wird und Abweichungen des Werkstückes von der Auflageebene eine dieser Abweichung entsprechende Veränderung der Position des Vorritzsägeblattes zur Auflageebene bewirkt. Durch diese Maßnahmen ist es jetzt gegeben, daß kontinuierlich über die gesamte Länge beziehungsweise Breite des zu schneidenden Werkstückes eine gleichbleibende vorritznuttiefe erzeugt wird. Dies gelingt insbesondere dadurch, daß Abstandsänderungen bezüglich der Werkstückseite, die der Auflageebene zugewandt ist, zu dieser Auflageebene sofort auf die Achse des oder der Vorritzsägeblätter übertragen werden, und so eine Korrektur entsprechend des ermittelten Maßes beziehungsweise entsprechend der ermittelten Abweichung vornimmt. Das heißt, es wird kontinuierlich das gemessene Abstandsmaß der Unterfläche des Werkstückes vom Bearbeitungstisch (Auflageebene) gemessen und das gemessene Maß einer Abweichung zu dem gewünschten Ritztiefenmaß hinzuaddiert. Die Position des Sägeblattpaares oder des Sägeblattes wird dabei auf einen entsprechende Überstand der Vorritzsägeblätter über Tisch eingestellt. Dadurch gelingt es selbstverständlich, eine gleichbleibende breite Ritznute zu erzeugen. Damit werden die beschriebenen Qualitätsmängel komplett beseitigt.

Die erfindungsgemäße Lösung geht entgegen den aus dem Stand der Technik bekannten Lösungen völlig anders heran, indem sie nämlich den Abstand zwischen der Auflage des Werkstückes auf dem Maschinentisch und der diesem Maschinentisch zugewandten Oberfläche, nämlich der auf ihr aufliegenden Oberfläche des Werkstückes bestimmt. Eine Abstandsänderung des aufliegenden Werkstückes von der Auflage bewirkt sofort eine Veränderung des Maßes des Vorritzsägeblattes, sodass dort immer eine gleichbleibende breite und tiefe Ritznut erzeugt wird. Egal, welches Sägeblatt als Vorritzsägeblatt eingesetzt wird, die Ritznute bleibt in ihrer Tiefe und in ihrer Breite immer gleich tief und gleich breit. Bei einer bekannten Lösung des Standes der Technik wird lediglich die Lage der Sägeblätter und/oder deren Schnittbreite ermittelt. Der Abstand des werkstückes zu der Auflageebene wird dabei nicht permanent gemessen beziehungsweise überwacht und bewirkt auch keine Abstandsveränderung, wenn das Werkstück beispielsweise von der Auflageebene sich entfernt beziehungsweise nach einer entsprechenden Maßabweichung wieder auf der Auflageebene aufliegt. Die Erfindung löst dieses Problem komplett, indem nämlich z.B ein der Sensor permanent angibt, ob eine Abstandsveränderung vorliegt oder nicht und dieses Signal eine Veränderung der Position des Vorritzsägeblattes zur Auflageebene bewirkt. Dabei kann eine direkte oder indirekte Koppelung dieses Problem in gleicher hervorragender Genauigkeit lösen.

Gegenüber einer anderen aus dem Stand der Technik bekannten Lösung, bei der lediglich die Oberfläche der Stapel von Platten mit einem Sensor abgetastet werden und die dort ermittelten Maßveränderungen zu einer Veränderung der Einstellung des Vorritzsägeblattes führen, ist festzuhalten, dass die durch diese Lösung verursachten Ungenauigkeiten bishin zu einer Wirkungslosigkeit des Vorritzsägeblattes bei entsprechenden Abweichungen durch die erfindungsgemäße Lösung ebenfalls vermieden werden. So können bei der Lösung nach dem Stand der Technik an der Oberfläche des Plattenstapels oder auch in den Zwischenräumen des Stapels selbst Unterschiede durch Maßungenauigkeiten entstehen, die dazu führen, dass beispielsweise das Vorritzsägeblatt in eine Position gerückt wird, die dazu führt, dass auf der Unterseite, nämlich auf der Auflage des Stapels, das Vorritzsägeblatt überhaupt nicht mehr in beziehungsweise an der Platte angreift und keine Vorritznute erzeugt. Dies kann beispielsweise dann der Fall sein, wenn beispielsweise Vertiefungen an der Oberfläche vorhanden sind und gleichzeitig auch an der Unterseite der Platte eine Vertiefung (Vergrößerung des Abstandes von der Auflageebene) erfolgt. Dann wird das Vorritzsägeblatt in eine tiefere Stellung positioniert und es wird nicht mehr an der Platte angreifen, weil dort jetzt ebenfalls eine Vergrößerung des Abstandes erfolgt und das Vorritzsägeblatt dann nicht mehr an der Platte angreifen kann.

Dadurch werden die im Stand der Technik beschriebenen Nachteile, nämlich des Ausreißens des Werkstückes an der Schnittlinie auf der Seite des austretenden Sägeblattes nicht vermieden. So liegt das Abtastelement gemäß dieses Standes der Technik eben auf dem Werkstückstapel auf und bestimmt durch sein Aufliegen die Tiefe der Ritznut. Die erfindungsgemäße Lösung sieht im Gegensatz dazu vor, dass die Auflageebene des Maschinentisches den Bezugspunkt für die Messung bildet. Ein Sensor z.B. erkennt genau, wann eine Abweichung des Werkstückes von der Auflageebene erfolgt und misst diesen Abstand und gibt das festgestellte Maß gleichzeitig direkt oder indirekt über eine Steuerung an den Stellantrieb für das Vorritzsägeblatt weiter, sodass eine sofortige Reaktion auf Maßänderungen erfolgt, die sich auch in einer enstprechenden Veränderung der Position des Vorritzsägeblattes auswirken und immer für eine gleichbleibend tiefe und gleichbleibend breite Nut sorgt. Die Probleme des Standes der Technik, wie vorher beschrieben, treten bei der erfindungsgemäßen Lösung nicht mehr auf.

Eine vorteilhafte Weiterbildung des erfindungsgemäßen Verfahrens sieht vor, dass die Position des Vorritzsägeblattes in Abhängigkeit vom Abstand des Werkstückes von der Auflageebene kontinuierlich so eingestellt wird, dass eine definierte Tiefe der Ritznute eingehalten wird. Das bedeutet, dass eine einmal eingestellte Ritznutentiefe, aufgrund eines Abstandes des Vorritzsägeblattes von der Auflageebene permanent korrigiert wird, wenn sich das Werkstück mit seiner Auflagefläche von der Auflageebene entfernt beziehungsweise wenn sich das Werkstück beziehungsweise die Werkstückfläche wieder an die Auflageebene annähert. Derartige Unebenheiten sind bei recht langen Werkstücken relativ häufig, sodass aufgrund des jetzt vorgeschlagenen erfindungsgemäßen Verfahren eine Vorritznute auch bei größeren Abweichungen des Abstandes der Werkstückauflagefläche von der Auflageebene ausgeglichen werden. Die Nachteile des Standes der Technik sind mit dieser erfindungsgemäßen Lösung ebenfalls komplett beseitigt.

Eine vorteilhafte Weiterbildung der vorher beschriebenen Varianten des erfindungsgemäßen Verfahrens sieht vor, dass die Überwachung mit mechanischen Mitteln erfolgt. Wenn in der Anmeldung von Überwachung die Rede ist, ist damit selbstverständlich auch gleichzeitig Steuerung oder Regelung gemeint. Das heißt, festgestellte Abweichungen werden nicht nur erfasst, sondern führen gleichzeitig zu einer Veränderung der Position der Vorritzsägeblätter oder eines einzelnen Vorritzsägeblattes bezüglich der Auflageebene, um die ermittelten Unebenheiten auszugleichen. Dadurch erhält man ständig einen exakten und gleichbleibenden Vorritznutenschnitt. Im Weiteren wird erreicht, dass die befürchtete zu große mechanische Beanspruchung, wie sie im Stand der Technik noch aufgrund solcher Abweichungen vorkommen konnte, komplett verhindert wird. Die Überwachung mit mechanischen Mitteln schließt demnach auch gleichzeitig die Weiterleitung der ermittelten Werte ein. Dies kann durch eine direkte mechanische Kupplung erfolgen. Dies kann allerdings auch durch eine Kombination von mechanischer Erfassung der Abstandswerte mit der Ermittlung oder Umbildung der ermittelten Werte über einen Wegsensor erfolgen, der dann entsprechende Signale an einen Stellantrieb gibt. Auch eine solche Kombination ist von der Erfindung selbstverständlich umfasst.

Eine vorteilhafte Weiterbildung der Erfindung sieht demnach vor, dass die Veränderung der Position des Vorritzsägeblattes mit elektrischen und/oder optischen Mitteln vorgenommen wird. Dazu verwendet man elektrische, elektronische, elektromechanische oder optische Sensoren. Selbstverständlich sind auch akustische Sensoren, nämlich Ultraschall möglich, um den Abstand von der Auflageebene bezüglich der Werkstücksfläche zu ermitteln.

Es wird auch ein vorteilhafter Verfahren vorgeschlagen, welches sich dadurch auszeichnet, dass die Veränderung der Position des Vorritzsägeblattes rechtwinklig zur Auflageebene, insbesondere im Wesentlichen vertikal orientiert vorgenommen wird. Damit wird ausgesagt, dass die Erfindung nicht auf eine Ausführungsform beschränkt ist, wie sie beispielsweise in den Figuren gezeigt ist, bei der das Vorritzsägeblatt und das Hauptsägeblatt vertikal orientiert angeordnet sind und die Auflagefläche horizontal. Vielmehr sind auch Sägemaschinen bekannt, bei denen die Auflagefläche beziehungsweise Auflageebene vertikal orientiert ist und die Sägeblätter dann horizontal. Aus diesem Grund ist eine rechtwinklige Position des Vorritzsägeblattes bezüglich der Auflageebene beide Varianten umfassend.

Eine vorteilhafte Weiterbildung der Erfindung sieht weiterhin vor, dass der Abstand von der Auflageebene mit mechanischen Mitteln, zum Beispiel durch eine direkte Kopplung auf die Achse des Vorritzsägeblattes übertragen wird. Diese Ausführungsform ist besonders effektiv und auch relativ einfach auszuführen. Sie zeichnet sich auch dadurch aus, dass es keine Versatzschwierigkeiten bezüglich des Erfassens und des Einstellens gibt. Es handelt sich dabei um eine sogenannte direkte mechanische Kopplung, die sehr schnell und effizient arbeitet.

Selbstverständlich ist von der Erfindung auch ein Verfahren umfasst, bei der das Maß für die Abweichung automatisch gesteuert auf die Achse des Vorritzsägeblattes, insbesondere über dort vorgesehene Stellmittel übertragen wird. Vorhergehend wurde bereits beschrieben, dass verschiedene Kombinationen möglich sind. So ist es beispielsweise möglich, die Abweichung mechanisch abzutasten und über einen Wegsensor dann elektrisch öder elektronisch gesteuert auf entsprechende Stellmittel in der Achse des Vorritzsägeblattes zu übertragen. Es ist weiterhin möglich, elektrische oder optische Sensoren oder dergleichen in oder an der Auflageebene anzuordnen, um den Abstand zum Werkstück jeweils elektrisch, elektronisch oder optisch zu erfassen und diese Werte dann an die entsprechenden Stellantriebe weiterzugeben.

Vorteilhaft wird für die Ermittlung des Abstandes wenigstens ein Abstandssensor, bevorzugt mit einem Gleitstück, einem Taster oder dergleichen verwendet . Hierbei handelt es sich um eine sehr kostengünstige und einfache Variante für die Ermittlung des Abstandes. Allerdings kann es bei dieser Ausführungsform durchaus aufgrund von Verschmutzungen des Abstandssensors zu notwendigen Wartungsarbeiten kommen, wenn beispielsweise der Abstandssensor verschmutzt und damit schwer oder nicht mehr beweglich ist. Aus diesem Grund bietet sich eine berührungsfreie Abstandsmessung für Kreissägenmaschinen besonders an.

Demnach ist entsprechend einer vorteilhaften Weiterbildung der Erfindung für die Ermittlung des Abstandes wenigstens ein optischer, akustischer, elektrischer, mechanisch-elektrischer, insbesondere induktiver oder kapazitiver Abstandssensor für die Abstandsmessung in dem erfindungsgemäßen Verfahren vorgesehen.

Der Abstandssensor misst die Abweichung und leitet den ermittelten Meßwert einer Steuerung zu. Als Steuerung kann dabei die Steuerung der Kreissäge selbst verwendet werden, wenn diese mit einer entsprechenden Steuerung ausgestattet ist. Selbstverständlich kann auch eine eigene Steuerung für das Vorritzsägeagregat vorgesehen sein, die dann die Steuerung für die Vorritzsägeblätter bezüglich des Abstandes zum Werkstück beziehungsweise des Abstandes zur Auflageebene übernimmt.

Weiterhin sieht eine vorteilhafte Weiterbildung des vorher beschriebenen Verfahrens vor, dass die Steuerung die ermittelten Werte erfasst, gegebenenfalls umrechnet und an die Stellmittel zur Veränderung der insbesonders vertikalen Position des Vorritzsägeblattes als Stellgröße weiterleitet. Der Steuerung muss dabei selbstverständlich der Durchmesser des Vorritzsägeblattes bekannt sein, wenn sie eine entsprechende Steuerung der Position des Vorritzsägeblattes vornehmen will.

Vorteilhaft addiert die Steuerung den ermittelten Wert für die Abweichung zu dem vorgegebenen Wert für die Schnitttiefe der Ritznute . Dieser so addierte Wert wird dann über die Stellmittel auf die Achse für die Vorritzsägeblätter übertragen, wodurch eine kontinuierliche Einstellung auf einen gewünschten Wert für die Tiefe der Ritznute gewährleistet ist.

Bevorzugt ist es, wenn die Steuerung wenigstens einen gespeicherten Parameter des Hauptsägeblattes und/oder des Vorritzsägeblattes, wie z. B. die Sägeblattdicke und/oder die Schnittfugenbreite und/oder den oder die Durchmesser abruft und bei der Veränderung der vertikalen oder horizontalen Position des Vorritzsägeblattes berücksichtigt.

Es ist weiterhin vorteilhaft vorgesehen, dass die Bestimmung der vertikalen oder horizontalen Position des Vorritzsägeblattes anhand eines Referenzpunktes, bevorzugt eines auf der Auflageebene definierten Referenzpunktes vorgenommen wird. Dieser Referenzpunkt sollte entweder in der Nähe des Vorritzsägeblattes, insbesondere in Schneidrichtung vor dem Sägeblatt vorgesehen sein. Eine sehr günstige Variante wird auch zur Verfügung gestellt, wenn dieser Referenzpunkt genau auf der Achse für die Vorritzsägeblätter angeordnet ist. Demnach bestimmt eine Weiterbildung des Verfahrens, dass der Referenzpunkt in Abhängigkeit von Achse des beziehungsweise der Vorritzsägeblätter bestimmt wird.

Gemäß einer weiteren vorteilhaften Variante leitet der Abstandssensor den ermittelten Abstandswert an die Steuerung oder direkt an einen Stellantrieb zur Veränderung der vertikalen position weiter.

Eine vorteilhafte Ausführungsform des erfindungsgemäßen Verfahrens sieht weiterhin vor, dass die Geometrie mit dem Kegelwinkel für ein kegelförmig zulaufendes Vorritzsägeblatt in der Steuerung hinterlegt wird und die Steuerung anhand dieser Werte sowie der Parameter des Hauptsägeblattes und der ermittelten Abweichung des werkstückes von der Auflageebene zumindest die Position für das Vorritzsägeblatt bezüglich der Auflageebene ermittelt und einstellt. Diese Geometrie ist bei kegelförmig zulaufenden Vorritzsägeblättern deshalb so wichtig, weil über den Kegelwinkel die Vorritznutenbreite eingestellt wird. Das heißt, je tiefer die Vorritznute geschnitten wird, umso breiter ist sie auch. Um nun einen Ausgleich aufgrund der Unebenheiten in der Auflagefläche des Werkstückes auf der Auflageebene zu gewährleisten, sind diese Werte sehr wichtig, wobei die Steuerung diese Werte berücksichtigt und die Korrektur entsprechend vornimmt, sodass auch für derartige Vorritzsägeblätter eine konstante Ritznutentiefe und damit eine konstante Ritznutenbreite gewährleistet ist.

Die Erfindung stellt auch eine Kreissäge mit einem Hauptsägeblatt und wenigstens einem Vorritzsägeblatt zur Verfügung, wobei das Vorritzsägeblatt zumindest in seiner Position bezüglich der Auflageebene mit wenigstens einem an der Achse des Vorritzsägeblattes angeordnetem Stellmittel verstellbar ist, mit Mitteln zur Durchführung eines oder mehrerer der Verfahren gemäß der vorher beschriebenen Ausführungsformen und Varianten der Erfindung. Mit dieser erfindungsgemäßen Kreissäge werden die gleichen Vorteile erzielt, wie sie bei der Beschreibung des erfindungsgemäßen Verfahrens bereits vorgestellt wurden. Die erwähnten Nachteile, die aus dem Stand der Technik bekannt sind, werden mit der Kreissäge nach der Erfindung ebenfalls komplett beseitigt.

Eine Kreissäge, wie zuvor beschrieben, zeichnet sich entsprechend einer vorteilhaften Weiterbildung der Erfindung dadurch aus, daß das Vorritzsägeblatt mit dem Stellmittel auf einer Führung positionierbar ist. Durch die Positionierbarkeit des Vorritzsägeblattes auf einer Führung ist es gegeben, daß eine kontinuierliche Verstellung der Lage des vorritzsägeblattes beziehungsweise seiner Achse bezüglich der Auflageebene erfolgen kann, so daß bei Abweichungen des Werkstückes von der Auflageebene auch hier entsprechende Korrekturen vorgenommen werden können.

Als Stellmittel ist beispielsweise ein elektrischer Stellmotor, ein Schwingenlager, eine Schienenführung, ein hydraulisch oder pneumatisch angetriebener Stellmotor, ein Hydraulik- oder Pneumatikzylinder oder dergleichen vorgesehen. Mittels dieser Stellmittel kann die kontinuierliche Verstellung der Vorritzsägeblätter bezüglich ihrer Lage zur Auflageebene permanent, aufgrund von ermittelten Abweichungen, erfolgen.

Eine Variante der vorher beschriebenen vorteilhaften Ausführungsformen der Kreissäge nach der Erfindung zeichnet sich dadurch aus, daß wenigstens ein Abstandssensor vorgesehen ist, der den Abstand der der Auflageebene zugewandten Werkstücksfläche des Werkstückes von der Auflageebene mißt und an wenigsten eines der vorher genannten Stellmittel überträgt beziehungsweise weiterleitet, derart, daß das Stellmittel eine Veränderung der Position des Vorritzsägeblattes in Abhängigkeit des gemessenen Abstandes vornimmt.

Als Abstandssensor werden vorteilhaft ein Taster, eine Rolle, ein Gleitstück oder dergleichen vorgesehen. Selbstverständlich ist es auch möglich, zwei oder mehrere Abstandssensoren in der Auflageebene anzuordnen, um noch zu genaueren Meßergebnissen zu gelangen. Durch die Steuerung könnte beispielsweise dann eine Mittelung der ermittelten Werte vorgenommen werden.

Als Abstandssensor ist vorteilhaft auch ein optischer, elektrischer oder akustischer Sensor vorgesehen. Dies wurde beim Verfahren bereits beschrieben. Diese Abstandssensoren haben den Vorteil, daß sie relativ störunanfällig gegenüber Verschmutzungen sind und demzufolge wesentlich störungsfreier arbeiten können, als beispielsweise mechanische Abtaster.

Eine Kreissäge, wie zuvor beschrieben, zeichnet sich entsprechend einer vorteilhaften Weiterbildung auch dadurch aus, daß der Abstandssensor in der Auflageebene beziehungsweise zwischen Auflageebene und der dieser Ebene zugewandten Seite des werkstückes vorgesehen ist, derart, daß dieser Abstand zwischen Auflageebene und der dieser Ebene zugewandten Fläche des Werkstückes beziehungsweise diesbezügliche Abstandsänderungen permanent erfaßt werden. Auch diese Maßnahme führt zum Ergebnis, daß die Vorritznute immer in ausreichender Tiefe und mit einer entsprechenden Schnittbreite zur Verfügung steht, daß Qualitätsminderungen durch eine verringerte Breite der Fuge oder aber durch eine nicht genügende Tiefe dieser Vorritzfuge komplett vermieden werden.

Bevorzugt ist es, wenn der Abstandssensor in Schneidrichtung vor der Achse des Vorritzsägeblattes beziehungsweise direkt auf dieser Achse beziehungsweise in gleicher Höhe in oder auf der Auflageebene vorgesehen ist. Dadurch wird eine direkte Übertragung der sich gerade in der Nähe des Schneidwerkzeuges befindlichen Teile des Werkstückes auf die Achse gewährleistet, so daß tatsächlich die gemessenen Werte auch an den Stellen zu einer Veränderung der Position der Vorritzsägeblätter führen, an denen die Werte gemessen wurden. Demnach ist es besonders günstig, wenn der Abstandssensor möglichst nah an dem Vorritzsägeblatt angeordnet ist. Bevorzugt ist der Abstandssensor in Höhe beziehungsweise parallel beabstandet vom Flugkreis des Vorritzsägeblattes angeordnet. Auch diese Maßnahme fuhrt letztendlich dazu, daß an den Stellen gemessen wird, an denen dann auch eine Veränderung benötigt wird.

In einer vorteilhaften Weiterbildung der erfindungsgemäßen Kreissäge wird vorgeschlagen, daß eine Steuerung vorgesehen ist, in der wenigstens ein Parameter des Vorritzsägeblattes und/oder Hauptsägeblattes hinterlegt und mittels vorgesehener Identifizierungsmittel abrufbar ist. Anhand dieses oder dieser Parameter(s) und anhand eines vorzugebenden Wertes oder vorgegebener Werte ist die vertikale oder horizontale Position beziehungsweise Lage für die Ritznute errechenbar und anhand dieses Wertes ist/sind das beziehungsweise die Vorritzsägeblätter auf die entsprechende Position bezüglich der Auflageebene einstellbar.

Eine günstige vorteilhafte Variante der erfindungsgemäßen Kreissäge zeichnet sich dadurch aus, daß ein mechanischer Abstandssensor mit einem Gleitstück in der Auflageebene in einem Abstand, insbesondere in Schneidrichtung vor der Achse des Vorritzsägeblattes vorgesehen ist, und der Abstandssensor mit dem Stellmittel und/oder der Steuerung zur Übertragung der gemessenen Abweichung verbunden ist beziehungsweise zusammenwirkt. Bei der vorgestellten Variante handelt es sich um eine recht kostengünstige Variante einer mechanischen Abstandsabtastung beziehungsweise -messung, die dann von der erfindungsgemäßen Kreissäge entweder über eine direkte Kopplung mit dem Stellmittel oder über eine indirekte Kopplung über die Steuerung zum Stellmittel zu den gewünschten ausgleichenden Bewegungen der Achse des Vorritzsägeblattes führt.

Das Gleitstück ist dabei bevorzugt mit der Federkraft einer Feder in einer erhöhten Position gegenüber der Auflageebene gehalten. Das Werkstück, welches dann über das Gleitstück fährt beziehungsweise geschoben wird, drückt dieses Gleitstück in die Auflageebene so weit hinein, wie es der Abstand der der Auflageebene zugewandten Fläche des Werkstückes erlaubt. Bei komplett aufliegendem Werkstück wird das Gleitstück vollständig in die Auflageebene eingedrückt. Damit werden Abweichungen des Werkstückes beziehungsweise der Werkstückfläche von der Auflageebene durch den Sensor erfaßt. Über einen Wegsensor kann beispielsweise jetzt dieser Wert umgerechnet und an eine Steuerung weitergeleitet werden. Es kann jedoch auch durch eine entsprechende Weitergabe an ein Stellmittel eine Verstellung der Positon beziehungsweise der Lage der Achse des Vorritzsägeblattes erfolgen.

Vorteilhaft ist die Achse des Vorritzsägeblattes als Welle vorgesehen und ist die Welle in einer Schwinge gelagert , mit einer konzentrisch zur Welle angeordneten Exzenterscheibe, die auf der Welle fixierbar ist und auf der ein vorzugsweise drehbar gelagerter Reifen vorgesehen ist, wobei eine Druckfeder die gesamte Anordnung an die der Auflagefläche zugewandte Seite des Werkstückes drückt. Hierbei handelt es sich um eine direkte mechanische Kopplung, die sehr effizient und sehr wirkungsvoll ist. Insbesondere ist hier gewährleistet, daß die Abtastung des Abstandes der Werkstückfläche von der Auflageebene über eine direkt auf der Achse beziehungsweise Welle des Vorritzsägeblattes vorgesehen ist. Der drehbar auf dem Exzenter gelagerte Reifen nimmt faktisch die Kontur der Oberfläche des Werkstückes, die der Auflageebene zugewandt ist, auf und überträgt diese direkt auf die Welle des Vorritzsägeblattes. Damit ist eine wirkungsvolle und direkte und sehr genaue Steuerung für die Tiefe der Vorritznute gegeben, die sich permanent an dem Verlauf der Oberfläche des Werkstückes orientiert.

Eine Kreissäge wie vorher beschrieben zeichnet sich nach einer Weiterbildung dadurch aus, daß wenigstens ein mechanischer Abstandssensor vorgesehen ist, der über einen Umsetzer die Werte für den Abstand vom Werkstück zur Auflageebene und/oder entsprechende Signale an die Steuerung zu senden vermag. Diese Variante wurde vorhergehend bereits beschrieben. Auch hier ist eine sehr günstige technische Lösung gefunden, die die Aufgabe der Erfindung komplett löst.

Eine bevorzugte Weiterbildung der erfindungsgemäßen Kreissäge sieht vor, daß der oder die Abstandssensoren die optischen, elektrischen und/oder akustischen Signale an die Steuerung übertragen oder als entsprechend umgewandelte Signale an das oder die Stellmittel zur Veränderung der Lage der Achse des Vorritzsägeblattes bezüglich der Auflageebene weiterleiten. Es ist weiterhin vorgesehen, daß das Hauptsägeblatt mit Vorritzsägeblatt bezüglich der Auflageebene feststehend beziehungsweise nicht beweglich ausgebildet ist. Es gibt allerdings auch Kreissägemaschinen, bei denen das Hauptsägeblatt mit dem Vorritzaggregat bezüglich der Auflageebene längsbeweglich ausgebildet ist. Auch eine solche Kreissäge ist von der erfindungsgemäßen Lösung umfaßt. Demnach zeichnet sich eine solche Kreissäge dadurch aus, daß das Hauptsägeblatt mit dem Vorritzaggregat bezüglich der Auflageebene längsbeweglich ausgebildet ist.

Die Erfindung wird nachfolgend anhand von Ausführungsbeispielen weiter beschrieben. Es zeigen:
- Fig. 1: eine schematische Darstellung eines Ausführungsbeispiels der Erfindung als Seitenansicht zur Beschreibung des Verfahrens anhand eines Details der Kreissäge,
- Fig. 2: schematische Darstellung nach Fig. 1 mit von der Auflageebene beabstandet angeordnetem Werkstück,
- Fig. 3: Draufsicht auf die Darstellung gemäß der Fig. 1 und 2,
- Fig. 4: Ausführungsbeispiel eines Tasters mit Gleitstück nach der Erfindung,
- Fig. 5: Variante einer Kreissäge nach der Erfindung in Seitenansicht und
- Fig. 6: Darstellung der Ausführungsform nach der Fig. 5 in Seitenansicht.

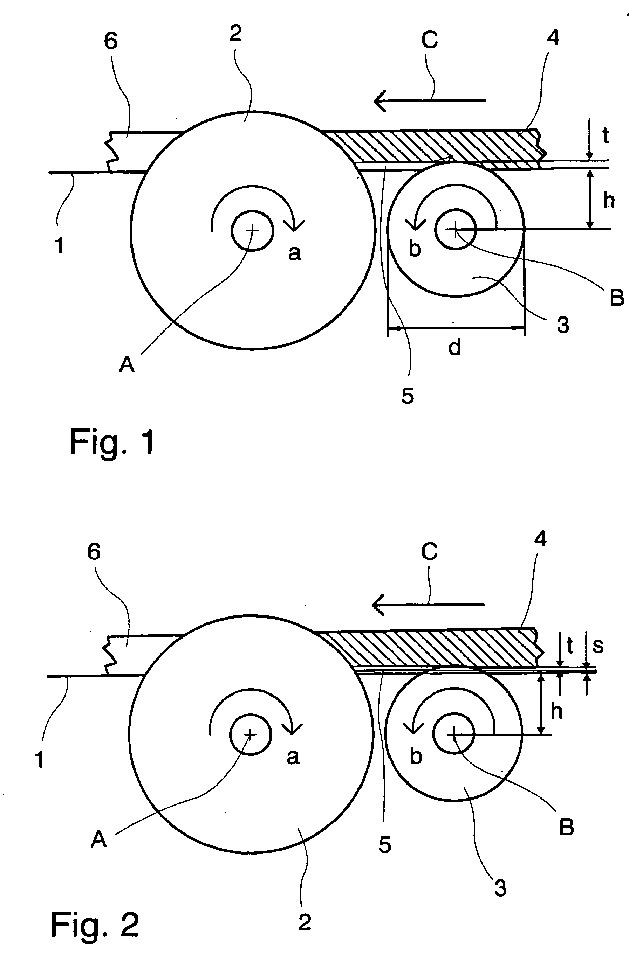

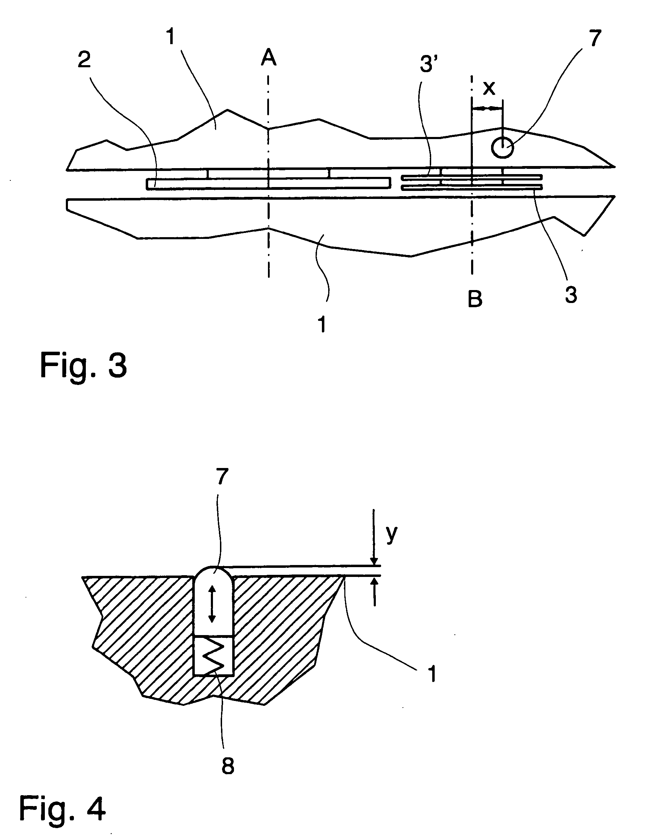

Die Figuren 1 bis 4 zeigen eine schematische Darstellung einer Ausführungsform der Erfindung zur Beschreibung des Verfahrens anhand von Details der erfindungsgemäßen Kreissäge. Diese Lösungsvarianten gemäß der Figuren 1 bis 4 müssen im Komplex betrachtet werden. Dabei zeigen die Figuren 1 bis 3 schematisch einAusführungsbeispiel der Erfindung, bei der eine automatische Regelung, z. B. mit elektrischen, optischen, akustischen Sensoren zugrunde liegt. Die Figuren 4 bis 6 zeigen einfachere, rein mechanische Ausführungsbeispiele. Dabei ist es selbstverständlich möglich, mechanische mit elektrischen beziehungsweise automatischen Varianten zu koppeln, wodurch die Vielfalt der möglichen Ausführungsbeispiele wesentlich erhöht wird. Die nachfolgende Beschreibung anhand der in den Figuren gezeigten Ausführungsbeispielen ist demnach nicht einschränkend zu verstehen. Vielmehr soll anhand dieser Ausführungsbeispiele lediglich das Verständnis für das erfindungsgemäße Verfahren und für die erfindungsgemäße Kreissäge geweckt werden.

Die Figur 1 zeigt eine schematische Darstellung in einer Seitenansicht, wobei das Hauptsägeblatt 2 in einer Auflageebene 1 vorgesehen ist. Auf der Auflageebene 1 ist ein Werkstück 4 in Richtung der Vorschubrichtung C beweglich angeordnet. Das Werkstück 4 weist eine Schnittfläche auf, die durch das Hauptsägeblatt 2 erzeugt wird. Entgegen der Schnittrichtung vor dem Hauptsägeblatt 2 befindet sich das Vorritzsägeblatt 3, welches um eine Achse B drehbar angeordnet ist. Das Vorritzsägeblatt 3 ist in einer Lage h bezüglich der Auflageebene 1 angeordnet. Mit dem Doppelpfeil an der Bezeichnung h wird angedeutet, daß das Vorritzsägeblatt 3 in seiner Position bezüglich der Auflageebene 1 verstellbar ausgebildet ist. Damit wird die Ritznutentiefe t der Ritznute 5 bestimmt.

In der Figur 1 ist dabei das Werkstück 4 als flach auf der Auflageebene 1 aufliegend gezeigt. Bei größeren Werkstücken 4 ist jedoch eine über die gesamte Fläche planaufliegende Werkstückfläche auf der Auflageebene 1 nicht gewährleistet. Vielmehr befindet sich zwischem dem Werkstück 4 und der Auflageebene 1 dennoch ein gewisser Spalt s, der über die gesamte Länge des Werkstückes 4 variiert. Dies führt dazu, daß das Vorritzsägeblatt 3 nicht mehr mit ausreichender Tiefe schneidet oder bei größeren Abständen s sogar völlig wirkungslos ist. Dadurch werden möglicherweise unsaubere Schnitte durch das Hauptsägeblatt dann erzeugt, die letztendlich entweder zu Nacharbeiten oder aber zu Ausschuß führen können. Dieses Problem wird gelöst, indem in der Nähe oder direkt an beziehungsweise auf der Achse B des Vorritzsägeblattes 3 ein als Gleitstück ausgebildeter Abstandssensor 7 (siehe Fig. 3 und 4) den Spalt s zur Unterseite des Werkstücks 4 permanent mißt und mit entsprechenden, nicht dargestellten Mitteln, auf die Achse B des Vorritzsägeblattes 3 überträgt. Ein Werkstück 4, das nicht plan aufliegt sondern einen Spalt s zur Auflageebene 1 aufweist, ist in Fig. 2 gezeigt. Dadurch ist es jetzt gegeben, daß, wenn beispielsweise ein Spalt s durch den Abstandssensor 7 gemessen wird, automatisch die Höhe h bezüglich der Auflageebene 1 verändert wird, derart, daß zu dem voreingestellten Maß für die Ritznutentiefe t der gemessene Wert des Spalts s hinzu addiert und dementsprechend die Achse B in Richtung auf das Werkstück zu verstellt wird. Mit dem Bezugszeichen A ist die Achse des Hauptsägeblattes 2 bezeichnet. Die Pfeile mit den Bezeichnungen a und b geben die Drehrichtung von Hauptsägeblatt 2 beziehungsweise Vorritzsägeblatt 3, 3' an.

Dadurch kann das Vorritzsägeblatt 3 immer in der annähernd gleichen Ritznutentiefe t die Ritznute 5 erzeugen. Die in den Figuren 1 und 2 nicht dargestellten Abstandssensoren 7 können entweder mechanisch oder aber elektrisch, optisch oder akustisch ausgebildet sein. So ist es beispielsweise möglich, mittels elektrischer Sensoren, beispielsweise kapazitiv oder induktiv den Spalt s von dem Werkstück 4 zur Auflageebene 1 zu messen und diesen gemessenen Wert dann über eine ebenfalls nicht dargestellte Steuerung auf entsprechende Stellmittel für die Veränderung der Lage der Achse B bezüglich der Auflageebene 1 zu übertragen. Damit wird letztendlich die Lage h zur Auflageebene 1 verändert. Die Überwachung und/oder Erfassung der Werte erfolgt durch die Sensoren permanent, entsprechend der Vorschubrichtung C des Werkstückes 4. Damit wird auch über die gesamte, der Auflageebene 1 zugewandten Seite 4 des Werkstückes gemessen und die gemessenen Werte jeweils permanent auf die Achse B des Vorritzsägeblattes 3 übertragen. Damit wird über die gesamte Länge des Werkstückes 4, welches zu schneiden ist, eine ausreichend tiefe Ritznute 5 mit der Ritznutentiefe t erzeugt.

In den Figuren 1 und 2 ist die Erfindung so beschrieben, daß das Vorritzsägeblatt 3 und das Häuptsägeblatt 2 bezüglich der Auflageebene 1 vertikal unter dieser vorgesehen sind. Selbstverständlich gibt es auch Ausführungsformen, bei denen beispielsweise die Auflageebene 1 nicht horizontal orientiert angeordnet ist, sondern vertikal. In diesem Fall ist dann das Hauptsägeblatt 2 und das Vorritzsägeblatt 3 horizontal und bezüglich der Auflageebene 1 im rechten Winkel vorgesehen. Die Darstellungen sind demnach nicht auf dieses Ausführungsbeispiel der vertikalen Positionierungsmöglichkeit des Vorritzsägeblattes 3 zur Veränderung der Lage h bezüglich der Auflageebene 1 eingeschränkt.

In Fig. 2 ist schematisch dargestellt, daß ein Spalt s zwischen dem Werkstück 4 und der Auflageebene 1 entstanden ist. Dieser kann durch Unebenheiten in der Oberfläche des Werkstückes 4 beispielsweise resultieren. Sollte sich der Spalt s bezüglich der Auflageebene 1 soweit verändern, daß das Vorritzsägeblatt 3 faktisch wirkungslos wäre, wäre auch ein Vorritzen nicht mehr möglich. Damit könnten die bereits beschriebenen Qualitätsmängel bezüglich des Schnittes vom Hauptsägeblatt 2 resultieren. Dieses Problem wird beseitigt, indem der Spalt s des Werkstückes 4 von der Auflageebene 1 permanent gemessen wird und die Abweichungen davon zu dem einmal eingestellten Wert für die Ritznutentiefe t hinzuaddiert wird und dadurch das Vorritzsägeblatt 3 entsprechend in seiner Lage h verändert wird. Da dieser Prozeß permanent während des gesamten Bewegungsablaufes beim Schnitt des Werkstückes 4 erfolgt, ist auch über die gesamte Werkstücklänge, die geschnitten werden muß, der Ausgleich gegeben, so daß eine ausreichende Ritznutentiefe t der Ritznut 5 über das gesamte Werkstück 4 gewährleistet ist.

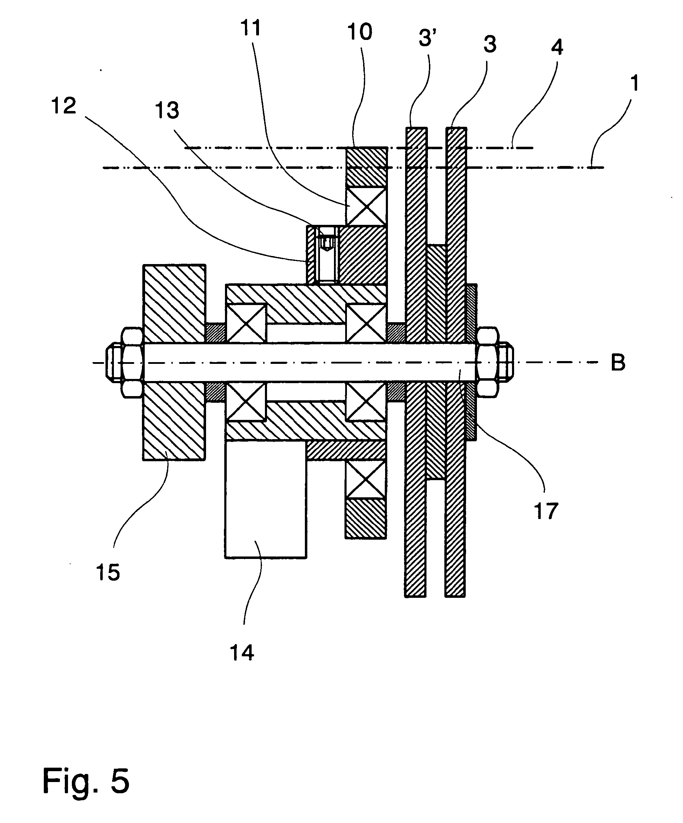

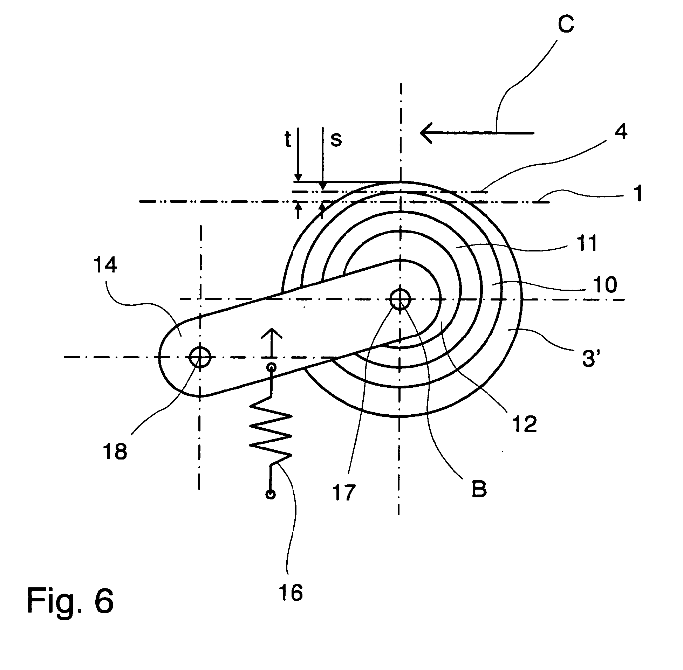

Die Fig. 3 zeigt in den Figuren 1 und 2 beschriebene Anordnung in einer Ansicht von oben, wobei es in dieser Variante ersichtlich ist, daß zwei Vorritzsägeblätter 3, 3', beabstandet voneinander angeordnet sind, so daß eine ausreichende Ritznutenbreite auch zur Verfügung gestellt wird. In der Figur 3 ist ersichtlich, daß hier ein Abstandsensor 7 mit Gleitstück in einem Abstand x von der Achse B für das vorritzsägeblatt 3, 3' angeordnet ist. Dieser Abstand ist bewußt sehr klein gewählt, um eine möglichst direkte Kopplung von Veränderungen des Spalts s bezüglich der Auflageebene 1 auf die Achse B des Vorritzsägeblattes 3 beziehungsweise der Vorritzsägeblätter 3, 3' zu übertragen. Günstigerweise ist der Sensor, wie zum Beispiel in den Fig. 5 und 6 gezeigt, direkt auf der Achse B für den oder die Vorritzsägeblätter 3, 3' angeordnet.

Die Fig. 4 zeigt einen beispielhaften Abstandssensor 7 im seitlichen Schnitt. Dabei wird ein als Gleitstück ausgebildeter Abstandssensor 7 in einer Bohrung der Auflageebene 1 durch die Kraft einer Feder 8 nach oben gedrückt. Das hier nicht gezeichnete Werkstück würde das Gleitstück gegen die Kraft der Feder 8 wieder nach unten drücken. Beispielsweise kann am Gleitstück ein nicht bezeichneter Wegsensor angebracht werden, durch den dann der Spalt s (dann identisch mit dem Gleitstücküberstand y) bestimmbar ist. Selbstverständlich sind auch viele andere Äusgestaltungsmöglichkeiten des Abstandssensors 7 möglich. Grundsätzlich ist aus Gründen der Verschmutzungsunempfindlichkeit ein berührungsloses System zu bevorzugen. Eine besonders preiswerte Ausführungsform stellt allerdings ein einfaches berührendes System dar, welches in Fig. 4 lediglich beispielhaft ausgeführt wurde.

Das erfindungsgemäße Verfahren arbeitet wie folgt.

In einer den Figuren nicht gezeichnete Steuerung wird ein gewünschtes Maß für die gesteutert zu haltende Ritznutentiefe t der Ritznute 5 eingegeben. Die Steuerung wird dann mit einem Abstandsensor 7, beispielsweise wie in Fig. 4 gezeigt, und einen durch die Steuerung beeinflußbaren, bevorzugt schnellen Positionierantrieb für die Position des Vorritzsägeblattes 3 beziehungsweise des Vorritzsägeblatt-Paares 3, 3' verbunden. Die Steuerung vergleicht kontinuierlich den vom Abstandsensor 7 gemessenen Spalt s der Unterfläche des Werkstückes 4 von der Auflageebene 1 und addiert dazu die gewünschte Ritznutentiefe t. Dadurch wird die Lage h des Sägeblatt-Paares 3, 3' auf einen dementsprechenden Überstand der Vorritzsägeblätter über der Auflageebene 1 eingestellt. Der Steuerung muß dabei der Durchmesser d der oder des Vorritzsägeblattes 3, 3' bekannt sein.

Der Abstand x zwischen Abstandsensor 7 und der Achse B der Vorritzsägeblätter 3, 3' ist anhand der Geschwindigkeit des Positionierantriebes für die vertikale Position des VorritzSägeblatt-Paares 3, 3' so zu wählen, daß bei einer angenommenen durchschnittlichen Vorschubgeschwindigkeit die Positonseinstellung möglichst genau der Unebenheit des Werkstückes 4 folgt. Dadurch wird eine gleichbleibende Ritznutentiefe t erreicht, was zu geringerer mechanischer Beanspruchung der Vorritz-Sägeblätter 3, 3' und damit auch zu einer sehr guten Schnittqualität führt. Bei kegelförmig zulaufenden Sägeblättern 3, 3' kann mit diesen Verfahren eine gleichbleibende Ritzbreite durch die gleichbleibende Ritznutentiefe t erreicht werden.

Die Fig. 5 zeigt eine bevorzugte Ausführungsform einer Kreissäge nach der Erfindung in einer Seitenansicht. Dabei wird lediglich der Schnitt durch ein erfindungsgemäßes Aggregat der Vorritz-Sägeblatt-Steuerung in mechanischer Ausführung gezeigt. Die Auflageebene 1 beziehungsweise die Tischoberfläche und die beiden VorritzSägeblätter 3, 3' sind montiert auf einer Welle 17 zu sehen. Die Welle 17 ist in einer Schwinge 14 über ein Lagerpaar gelagert. Angetrieben wird die Welle 17 beispielsweise über eine Riemenscheibe 15, wobei Riemen und Motor der Übersichtlichkeit halber hier nicht gezeigt sind. Auf der Schwinge 14 ist konzentrisch zur Welle 17 eine Exzenterscheibe 12 drehbar befestigt.

Die Drehbewegung der Exzentersscheibe 12 auf der Schwinge 14 kann dabei durch die Madenschraube 13 geklemmt werden. Auf der Exzenterscheibe 12 sitzt über ein Lager 11 ein Reifen 10. Auch auf der Auflageebene 1 zugewandte Unterfläche des Werkstückes 4 ist schematisch gekennzeichnet.

In der Seitenansicht des Aggregates in der Fig. 6 ist dargestellt, daß die Schwinge 14 nach oben gedrückt wird. Dies erfolgt beispielsweise über eine Druckfeder 16. Die Schwinge 14 ist an der Achse 18 drehbar gelagert. Wird nun ein Werkstück in Vorschubrichtung C über die Auflageebene 1 geschoben, berührt es zunächst die Vorritzsägeblätter 3, 3' und unmittelbar danach den Reifen 10. Der Reifen 10 rollt durch das Lager 11 auf dem Werkstück 4 ab. Das gesamte Aggregat wird damit gegen die Kraft der Druckfeder 16 in eine Position gedrückt, bei der die Unterfläche des Werkstückes 4 tangential die Oberfläche des Reifens 10 berührt. Die Ritznutentiefe t bleibt somit konstant unabhängig in der Entfernung der Unterfläche des Werkstückes 4 zur Oberfläche der Auflageebene 1.

Die Einstellung der Ritznutentiefe t erfolgt durch Verdrehung der Exzenterscheibe 12 auf der Schwinge 14. Geklemmt wird die Exzenterscheibe 12 im Ausführungsbeispiel über die Madenschraube 13. Selbstverständlich sind auch andere mögliche Klemmvarianten von der Erfindung mit umfaßt.

Auf das Lager 11 des Reifens 10 kann dann verzichtet werden, wenn ein Gleiten auf dem Werkstück 4 geduldet wird. Die Exzenterscheibe 12 und der Reifen 10 bilden dann gemeinsam einen Tastfühler. Auch hier sind zur Einstellung der Ritznutentiefe t anderer Varianten denkbar, zum Beispiel über eine Einstellung durch Zug- beziehungsweise Druckschrauben. Im einfachsten Fall kann ein Tastfühler verwendet werden, der einer Schraube ähnelt, deren Kopf zur Erreichung von guten Gleiteigenschaften abgerundet ist. Dieser Tastfühler wird dann in ein Gewinde eingedreht, das beispielsweise in der Schwinge 14 angeordnet sein kann.

Der Vorteil einer elektrisch beziehungsweise elektronisch gesteuerten Variante ist die Unbeeinflußbarkeit durch die Schnittkräfte der Vorritzsägeblätter 3, 3'. Vorteil der mechanischen Variante ist demgegenüber ein einfacher und kostengünstiger Aufbau.

## Patentansprüche

1. Verfahren zur Einstellung der Schnitttiefe der Ritznute in einem an beziehungsweise auf einer Auflageebene anbeziehungsweise aufliegenden Werkstück wenigstens eines Vorritzsägeblattes einer Kreissäge, **dadurch gekennzeichnet, dass** der Abstand des Werkstückes zu der Auflageebene permanent gemessen beziehungsweise überwacht wird und Abweichungen des Werkstückes von der Auflageebene eine dieser Abweichung entsprechende Veränderung der Position des Vorritzsägeblattes zur Auflageebene bewirkt.

2. Verfahren nach Anspruch 1, **dadurch gekennzeichnet, dass** die Position des Vorritzsägeblattes in Abhängigkeit vom Abstand des Werkstückes von der Auflageebene kontinuierlich so eingestellt wird, dass eine definierte Tiefe der Ritznute eingehalten wird.

3. Verfahren nach einem oder beiden der vorhergehenden Ansprüche, **dadurch gekennzeichnet, dass** die Überwachung mit mechanische Mittel erfolgt und/oder die Veränderung der Position des Vorritzsägeblattes rechtwinklig zur Auflageebene, insbesondere im Wesentlichen vertikal orientiert vorgenommen wird.

4. Verfahren nach einem oder mehreren der vorhergehenden Ansprüche, **dadurch gekennzeichnet, dass** die Veränderung der Position des Vorritzsägeblattes im Wesentlichen horizontal orientiert vorgenommen wird und/oder die Überwachung mit elektrischen und/oder optischen Mitteln vorgenommen wird und/oder der Abstand von der Auflageebene mit mechanischen Mitteln, zum Beispiel durch eine direkte Kopplung auf die Achse des Vorritzsägeblattes übertragen wird.

5. Verfahren nach einem oder mehreren der vorhergehenden Ansprüche, **dadurch gekennzeichnet, dass** das Maß für die Abweichung automatisch gesteuert auf die Achse des Vorritzsägeblattes, insbesondere über dort vorgesehene Stellmittel übertragen wird und/oder für die Ermittlung des Abstands wenigstens ein Abstandssensor, bevorzugt mit einem Gleitstück, einem Taster oder dergleichen verwendet wird und/oder für die Ermittlung des Abstands wenigstens ein optischer, akustischer, elektrischer, mechanisch-elektrischer, insbesondere induktiver oder kapazitiver Abstandssensor eingesetzt wird.

6. Verfahren nach einem oder mehreren der vorhergehenden Ansprüche, **dadurch gekennzeichnet, dass** der Abstandssensor die Abweichung misst und den ermittelten Messwert einer Steuerung zuleitet und/oder die Steuerung die ermittelten Werte erfaßt, gegebenenfalls umrechnet und an die Stellmittel zur Veränderung der insbesondere vertikalen Position des Vorritzsägeblattes als Stellgröße weiterleitet und/oder die Steuerung den ermittelten Wert für die Abweichung zu dem vorgegebenen Wert für die Schnitttiefe der Ritznute addiert.

7. Verfahren nach einem oder mehreren der vorhergehenden Ansprüche, **dadurch gekennzeichnet, dass** die Steuerung wenigstens einen gespeicherten Parameter des Hauptsägeblattes und/oder des Vorritzsägeblattes, wie zum Beispiel die Sägeblattdicke und/oder die Schnittfugenbreite und/- oder den oder die Durchmesser abruft und bei der Veränderung der vertikalen oder horizontalen Position berücksichtigt und/oder die Bestimmung der vertikalen oder horizontalen Position des Vorritzsägeblattes anhand eines Referenzpunktes, bevorzugt eines auf der Auflageebene definierten Referenzpunktes vorgenommen wird und/oder der Referenzpunkt in Abhängigkeit von der Achse des beziehungsweise der Vorritzsägeblätter bestimmt wird.

8. Verfahren nach einem oder mehreren der vorhergehenden Ansprüche, **dadurch gekennzeichnet, dass** der Abstandssensor den ermittelten Abstandswert an die Steuerung oder direkt an einen Stellantrieb zur Veränderung der vertikalen Position weiterleitet und/oder die Geometrie mit dem Kegelwinkel für ein kegelförmig zulaufendes Vorritzsägeblatt in der Steuerung hinterlegt wird und die Steuerung anhand dieser Werte sowie der Parameter des Hauptsägeblattes und der ermittelten Abweichung des Werkstückes von der Auflageebene zumindest die Position für das Vorritzsägeblatt bezüglich der Auflageebene ermittelt und einstellt.

9. Kreissäge mit einem Hauptsägeblatt (2) und wenigstens einem Vorritzsägeblatt (3), das zumindest in seiner Lage (h) bezüglich der Auflageebene (1) mit wenigstens einem an der Achse (B) des Vorritzsägeblattes (3) angeordnetem Stellmittel verstellbar ist, **gekennzeichnet durch** Mittel zur Durchführung eines oder mehrerer der Verfahren gemäß der vorhergehenden Ansprüche.

10. Kreissäge nach Anspruch 9, **dadurch gekennzeichnet, dass** das Vorritzsägeblatt (3, 3') mit dem Stellmittel auf einer Führung positionierbar ist und/oder als Stellmittel ein elektrischer Stellmotor, ein Schwingenlager, eine Schienenführung, ein hydraulisch oder pneumatisch angetriebener Stellmotor, ein Hydraulik- oder Pneumatikzylinder oder dergleichen vorgesehen ist.

11. Kreissäge nach einem oder beiden der vorhergehenden Ansprüche 9 und 10, **dadurch gekennzeichnet, dass** wenigstens ein Abstandssensor (7) vorgesehen ist, der den Spalt (s) der der Auflageebene (1) zugewandten Werkstückfläche des Werkstückes (4) von der Auflageebene (1) misst und an wenigstens ein Stellmittel überträgt beziehungsweise weiterleitet, derart, dass das Stellmittel eine Veränderung der Lage (h) des Vorritzsägeblattes (3, 3') in Abhängigkeit des gemessenen Abstandes vornimmt und/oder als Abstandssensor (7) ein Taster, eine Rolle, ein Gleitstück oder dergleichen vorgesehen ist.

12. Kreissäge nach einem oder mehreren der Ansprüche 9 bis 11, **dadurch gekennzeichnet, dass** als Abstandssensor (7) ein optischer, elektrischer oder akustischer Sensor vorgesehen ist und/oder der Abstandssensor (7) in der Auflageebene (1) beziehungsweise zwischen Auflageebene (1) und der dieser Ebene zugewandten Seite des Werkstücks (4) vorgesehen ist, derart, dass dieser Spalt (s) zwischen Auflageebene (1) und der dieser Ebene zugewandten Fläche des Werkstückes (4) beziehungsweise diesbezügliche Abstandsänderungen permanent erfasst werden.

13. Kreissäge nach einem oder mehreren der Ansprüche 9 bis 12, **dadurch gekennzeichnet, dass** der Abstandssensor (7) in Vorschubrichtung (C) vor der Achse (B) des Vorritzsägeblattes (3, 3') beziehungsweise direkt auf dieser Achse (B) beziehungsweise in gleicher Höhe in oder auf der Auflageebene (1) vorgesehen ist und/oder der Abstandssensor (7) möglichst nah an dem Vorritzsägeblatt (3, 3') angeordnet ist und/oder der Abstandssensor (7) in Höhe beziehungsweise parallel beabstandet vom Flugkreis des Vorritzsägeblattes (3, 3') angeordnet ist.

14. Kreissäge nach einem oder mehreren der Ansprüche 9 bis 13, **dadurch gekennzeichnet, dass** eine Steuerung vorgesehen ist, in der wenigstens ein Parameter des Vorritzsägblattes (3, 3') und/oder Hauptsägeblattes (2) hinterlegt und mittels vorgesehenem Identifizierungsmittel abrufbar ist, anhand dieses Parameters und anhand eines vorzugebenden Wertes oder vorgegebenen Werte die vertikale oder horizontale Position beziehungsweise Lage (h) für die Ritznute errechenbar und anhand dieses Wertes das oder die Vorritzsägeblätter (3, 3') auf die entsprechende Lage (h) bezüglich der Auflageebene (1) einstellbar ist/sind und/oder ein mechanischer Abstandssensor (7) mit einem Gleitstück in der Auflageebene (1) in einem Abstand (x), insbesondere in Vorschubrichtung (C) von der Achse (B) des Vorritzsägeblattes (3, 3') vorgesehen ist, und der Abstandssensor (7) mit dem Stellmittel und/oder der Steuerung zur Übertragung der gemessenen Abweichung verbunden ist.

15. Kreissäge nach einem oder mehreren der Ansprüche 9 bis 14, **dadurch gekennzeichnet, dass** das Gleitstück mit der Federkraft einer Feder (8) in einer erhöhten Position gegenüber der Auflageebene (1) gehalten wird und/oder die Achse (B) des Vorritzsägeblattes (3, 3') als Welle (17) vorgesehen ist, die Welle (17) in einer Schwinge (14) gelagert ist, mit einer konzentrisch zur Welle (17) angeordneten Exzenterscheibe (12), die auf der Welle (17) fixierbar ist und auf der ein vorzugsweise drehbar gelagerter Reifen (10) vorgesehen ist, wobei eine Druckfeder (16) die gesamte Anordnung an die der Auflageebene (1) zugewandte Seite des Werkstückes (4) drückt.

16. Kreissäge nach einem oder mehreren der Ansprüche 9 bis 15, **dadurch gekennzeichnet, dass** wenigstens ein mechanischer Abstandssensor (7) vorgesehen ist, der über einen Umsetzer die Werte für den Spalt (s) vom Werkstück (4) zur Auflageebene (1) und/oder entsprechende Signale an die Steuerung zu senden vermag und/oder der oder die Abstandssensoren (7) die optischen, elektrischen und/oder akustischen Signale an die Steuerung übertragen oder als entsprechend umgewandelte Signale an das oder die Stellmittel zur Veränderung der Lage (h) der Achse des Vorritzsägeblattes (3, 3') bezüglich der Auflageebene (1) weiterleiten.

17. Kreissäge nach einem oder mehreren Ansprüchen 9 bis 16, **dadurch gekennzeichnet, dass** das Hauptsägeblatt (2) mit Vorritzsägeblatt (3, 3') bezüglich der Auflageebene (1) feststehend beziehungsweise nicht beweglich ausgebildet ist oder das Hauptsägeblatt (2) mit dem Vorritzaggregat (3, 3') bezüglich der Auflageebene (1) längsbeweglich ausgebildet ist.

## Claims

1. Method for setting the depth of cut of the slit groove in a work piece being in contact with a bearing surface or resting on a bearing surface of at least one pre-slitting saw blade of a circular saw, **characterised in that** the distance of the work piece to the bearing surface is permanently measured or monitored, and differences of the work piece to the bearing surface resulting in a change of the position of the pre-slitting saw blade corresponding to this difference.

2. Method according to claim 1, **characterised in that** the position of the pre-slitting saw blade is set continuously depending on the distance of the work piece from the bearing surface in such a way that a defined depth of the slit groove is kept.

3. Method according to one or both of the preceding claims, **characterised in that** the monitoring is carried out by mechanical means, and/or the change of the position of the pre-slitting saw blade is done rectangular to the bearing surface, in particular orientated essentially vertically.

4. Method according to one or more of the preceding claims, **characterised in that** the change of the position of the pre-slitting saw blade is carried out orientated essentially horizontally, and/or the monitoring is carried out with electrical and/or optical means, and/or the distance to the bearing surface is transferred by mechanic means, for example by a direct coupling on the axle of the pre-slitting saw blade.

5. Method according to one or more of the preceding claims, **characterised in that** the size for the difference is transferred automatically controlled to the axle of the pre-slitting saw blade, in particular via setting means provided there, and/or for determining the distance at least one distance sensor, preferably with a sliding block, a tracer or the like is used, and/or for determining the distance at least one optical, acoustic, electrical, mechanic-electrical, in particular inductive or capacitive distance sensor is employed.

6. Method according to one or more of the preceding claims, **characterised in that** the distance sensor measures the difference and transmits the determined measure value to a control, and/or the control collects the determined values, converts them, if necessary, and transmits them to the setting means for changing the in particular vertical position of the pre-slitting saw blade as regulated quantity, and/or the control ads the determined value of the difference to the given value for the depth of cut of the slit groove.

7. Method according to one or more of the preceding claims, **characterised in that** the control polls at least one stored parameter of the main saw blade and/or the pre-slitting saw blade, such as for example the thickness of the saw blade and/or the width of the cut joint and/or the diameter(s), and takes them into consideration when changing the vertical or horizontal position, and/or the determination of the vertical or horizontal position pre-slitting saw blade is done by means of a reference position, preferably a reference position defined on the bearing surface, and/or the reference position is defined depending on the axle or the pre-slitting saw blade(s).

8. Method according to one or more of the preceding claims, **characterised in that** the distance sensor transmits the determined distance value to the control or directly to an actuating drive for changing the vertical position, and/or the geometry with the cone angle for a cone-like tapering pre-slitting saw blade is deposited in the control, and the control determines and sets basing on these values as well as on the parameters of the main saw blade and the determined difference of the work piece from the bearing surface at least the position for the pre-slitting saw blade with respect to the bearing surface.

9. Circular saw with a main saw blade (2) and at least one pre-slitting saw blade (3) the position (h) of which can at least be adjusted with respect to the bearing surface (1) by means of at least one setting means arranged at the axle (B) of the pre-slitting saw blade (3), for carrying out one or more of the methods **characterised by** means according to the preceding claims.

10. Circular saw according to claim 9, **characterised in that** the pre-slitting saw blade (3, 3') can be positioned by means of the setting means on a guide, and/or as setting means an electric servomotor, a link bracket, a rail guide, a hydraulically or pneumatically driven servomotor, a hydraulic or pneumatic cylinder or the like is provided.

11. Circular saw according to one or both of the preceding claims 9 and 10, **characterised in that** at least one distance sensor (7) is provided measuring the gap (s) of the work piece surface of the work piece (4) facing the bearing surface (1) to the bearing surface (1) and transmitting or transferring it to at least one setting means in such a way that the setting means carries out a change of position (h) of the pre-slitting saw blade (3, 3') depending on the measured distance, and/or as distance sensor (7) a tracer, a roller, a sliding block or the like is provided.

12. Circular saw according to one or more of the claims 9 to 11, **characterised in that** as distance sensor (7) an optic, electric or acoustic sensor is provided, and/or the distance sensor (7) is provided in the bearing surface (1) or between the bearing surface (1) and the face of the work piece (4) facing this surface in such a way that this gap (s) between bearing surface (1) and the face of the work piece (4) facing this surface or the respective changes of distance are collected permanently.

13. Circular saw according to one or more of the claims 9 to 12, **characterised in that** the distance sensor (7) is provided in advance direction (C) in front of the axle (B) of the pre-slitting saw blade (3, 3') or directly on this axle (B) or at the same level in or on the bearing surface (1), and/or the distance censor (7) is arranged as close as possible to the pre-slitting saw blade (7), and/or the distance sensor (7) is arranged at the height of or parallel at a distance to the flight circle of the pre-slitting saw blade (3, 3').

14. Circular saw according to one or more of the claims 9 to 13, **characterised in that** a control is provided in which at least one parameter of the pre-slitting saw blade (3, 3') and/or the main saw blade (2) is deposited and can be polled by means of provided identification means, by means of this parameter and a value which has to be given the vertical or horizontal situation or position (h) for the slit groove can be calculated and the pre-slitting saw blade(s) can be set to the respective position (h) with respect to the bearing surface (1) because of this value, and/or a mechanic distance sensor (7) with a sliding block is provided in the bearing surface (1) at a distance (x), in particular in advance direction (C) from the axle (B) of the pre-slitting saw blade (3, 3'), and the distance sensor (7) is connected with the setting means and/or the control for transmitting the measured difference.

15. Circular saw according to one or more of the claims 9 to 14, **characterised in that** the sliding block is held with the spring power of a spring (8) in a heightened position compared with the bearing surface (1), and/or the axle (B) of the pre-slitting saw blade (3, 3') is provided as shaft (17), the shaft (17) is supported in a link (14) with an excenter disc (12) arranged concentrically to the shaft (17) which can be fixed on the shaft (17) and on which a preferably rotating hoop (10) is provided, a pressure spring (16) pressing the complete arrangement to the face of the work piece (4) facing the bearing surface (1).

16. Circular saw according to one or more of the claims 9 to 15, **characterised in that** at least one mechanic distance sensor (7) is provided which is able to transmit via a converter the values for the gap (s) from work piece (4) to bearing surface (1) and/or corresponding signals to the control, and/or the distance sensors (7) transmit the optical, electric and/or acoustic signals to the control or transfer as accordingly converted signals to the or the setting means for changing the position (h) of the axle of the pre-slitting saw blade (3, 3') with respect to the bearing surface (1).

17. Circular saw according to one or more of the claims 9 to 16, **characterised in that** the main saw blade (2) with pre-slitting saw blade (3, 3') is designed stationary or non-moving with respect to the bearing surface (1), or the main saw blade (2) with the pre-slitting aggregate (3, 3') is designed moving longitudinally with respect to the bearing surface (1).

## Revendications

1. Procédé d'ajustement de la profondeur d'une rainure créée dans une pièce à usiner situé sur ou contre un plan d'appui par au moins une lame inciseur d'une scie circulaire, **caractérisée en ce que** l'écart de position entre la pièce à usiner et le plan d'appui est mesuré et contrôlé en permanence de façon à ce que l'écart entre la position de la pièce à usiner et le plan d'appui provoquent un réajustement approprié de la position de la lame inciseur par rapport au plan d'appui.

2. Procédé selon la revendication 1, **caractérisée en ce que** la position de la lame inciseur est ajustée en continue en fonction de la distance entre la pièce à usiner et le plan d'appui afin de maintenir une profondeur prédéfinie de la coupe.

3. Procédé selon une ou deux des revendications précédentes,
**caractérisé en ce que** le contrôle est effectué à l'aide de moyens mécaniques et/ou **en ce que** la position de la lame inciseur est modifiée selon une direction perpendiculaire au plan d'appui et en particulier approximativement verticale.

4. Procédé selon une ou plusieurs des revendications précédentes, **caractérisé en ce que** la position de la lame inciseur est modifiée selon une direction approximativement horizontale et/ou **en ce que** le contrôle est effectué à l'aide de moyens électriques et/ou optiques et/ou **en ce que** les variations de la position de la pièce par rapport au plan d'appui sont transmises à l'aide de moyens mécaniques, par exemple par un engrenage direct, sur l'axe de la lame inciseur.

5. Procédé selon une ou plusieurs des revendications précédentes, **caractérisé en ce que** la valeur de l'écart mesurée est transmise de façon automatique sur le positionnement de l'axe de la lame inciseur et en particulier via des moyens d'ajustement situés sur cet axe et/ou **en ce que** la distance est évaluée à l'aide d'au moins un capteur de distance comportant de préférence un coulisseau, un capteur mécanique ou un dispositif similaire et/ou **en ce que** la mesure de la distance est effectuée grâce à au moins un capteur optique, acoustique, électrique, électromécanique et en particulier inductif ou capacitif.

6. Procédé selon une ou plusieurs des revendications précédentes, **caractérisé en ce que** le capteur de distance mesure l'écart et transmet la valeur de l'écart mesuré à un système de contrôle et/ou **en ce que** le système de contrôle saisit les valeurs mesurées, les recalculent le cas échéant et les transmet en tant que valeurs de modification vers des moyens d'ajustement afin de modifier en particulier la position verticale de la lame inciseur et/ou **en ce que** le système de contrôle additionne la valeur de l'écart mesuré à la valeur prédéfinie de la profondeur de coupe à effectuer.

7. Procédé selon une ou plusieurs des revendications précédentes, **caractérisé en ce que** le système de contrôle rappelle au moins un paramètre stocké de la lame principale et/ou de la lame inciseur, telle la largeur de la lame, le diamètre et/ou la largeur de la gorge à réaliser et/ou le ou les diamètre(s) et tient compte de ce paramètre lors d'une variation de la position verticale ou horizontale et/ou **en ce que** la détermination de la position verticale ou horizontale de la lame inciseur est réalisée à l'aide d'un point de référence situé de préférence sur le plan d'appui et/ou **en ce que** le point de référence est choisi par rapport à l'axe de ou des lame(s) inciseur.

8. Procédé selon une ou plusieurs des revendications précédentes, **caractérisé en ce que** le capteur de distance transmet la valeur mesurée au système de contrôle ou directement à une commande de réglage permettant d'ajuster la position verticale et/ou **en ce que** les paramètres géométriques incluant l'angle de cône d'une lame inciseur d'une section conique sont stockés dans le système de contrôle qui mesure et détermine alors la position de la lame inciseur à l'aide de ces paramètres, de ceux de la lame principale et également des écarts mesurés de la position de la pièce à usiner par rapport au plan d'appui.

9. Scie circulaire comportant une lame principale (2) et au moins une lame inciseur (3) dont la position (h) par rapport au plan d'appui (1) peut être modifiée à l'aide d'au moins un moyen d'ajustement situé sur l'axe (B) de la lame inciseur (3) **caractérisé par** l'existence de moyens permettant de réaliser un ou plusieurs des procédés selon les revendications précédentes.

10. Scie circulaire selon la revendication 9, **caractérisée en ce que** la lame inciseur (3, 3') est positionnée le long d'un guidage à l'aide du moyen d'ajustement et/ou **en ce que** le moyen d'ajustement est un moteur électrique pas à pas, une articulation, un guidage par rail, une commande d'ajustement hydraulique ou pneumatique, un vérin hydraulique ou pneumatique ou un dispositif similaire.

11. Scie circulaire selon une ou deux des revendications précédentes 9 et 10, **caractérisée en ce qu'**il existe au moins un capteur de distance (7) mesurant la largeur de la fente (s) entre la surface inférieure de la pièce à usiner (4) et le plan d'appui (1) et transmettant ou acheminant cette valeur à au moins un moyen d'ajustement de façon à ce que le moyen d'ajustement modifie la position (h) de la lame inciseur (3, 3') en fonction de la distance mesurée et/ou **en ce que** le capteur de distance (7) est un capteur mécanique, une roue, un coulisseau ou un élément similaire.

12. Scie circulaire selon une ou plusieurs des revendications précédentes 9 à 11, **caractérisée en ce que** le capteur de distance (7) est un capteur optique, électrique ou acoustique et/ou **en ce que** le capteur de distance (7) est situé dans le plan d'appui (1) ou entre le plan d'appui (1) et la surface de la pièce à usiner (4) la plus proche de ce plan d'appui afin de pouvoir mesurer en permanence la largeur de cette fente (s) formée entre la surface de la pièce à usiner (4) et le plan d'appui (1).

13. Scie circulaire selon une ou plusieurs des revendications précédentes 9 à 12, **caractérisée en ce que** le capteur de distance (7) est situé par rapport à l'axe (B) de la lame inciseur (3, 3') et par rapport à la direction d'avancement (C) de la pièce à usiner soit avant l'axe (B), soit directement sur cet axe, soit au même niveau et dans le plan d'appui (1) ou au-dessus et/ou **en ce que** le capteur de distance (7) est situé le plus proche possible de la lame inciseur (3, 3') et/ou **en ce que** le capteur de distance (7) est situé au niveau du cercle de coupe de la lame inciseur (3, 3') voire latéralement décalé.

14. Scie circulaire selon une ou plusieurs des revendications précédentes 9 à 13, **caractérisée en ce qu'**un système de contrôle est prévu, capable de stocker et de rappeler à l'aide de moyens d'identification au moins un paramètre concernant la lame inciseur (3, 3') et/ou la lame principale (2), permettant ainsi avec un ou plusieurs paramètre(s) supplémentaire(s) de calculer la position verticale ou horizontale (h) de la rainure par rapport au plan d'appui (1) et d'ajuster la position (h) par rapport à ce plan d'appui (1) et/ou **en ce qu'**il existe un capteur de distance mécanique (7) comportant un élément coulissant au niveau du plan d'appui (1) à une distance (x) avant l'axe (B) de la lame inciseur (3, 3') par rapport à une direction d'avancement (C) et connecté au moyen d'ajustement et/ou au système de contrôle pour la transmission de l'écart mesuré.

15. Scie circulaire selon une ou plusieurs des revendications précédentes 9 à 14, **caractérisée en ce que** l'élément coulissant est maintenu à l'aide de la force d'un ressort (8) dans une position surélevée par rapport au plan d'appui (1) et/ou **en ce que** l'axe (B) de la lame inciseur (3, 3') est un arbre (17) maintenu de façon mobile par un bras articulé (14) et comportant un disque excentré (12) pouvant être fixé sur l'arbre (17) et sur lequel est situé un anneau (10) de préférence mobile et avec un ressort (16) poussant cet ensemble contre la face de la pièce à usiner (4) qui est la plus proche du plan d'appui (1).

16. Scie circulaire selon une ou plusieurs des revendications précédentes 9 à 15, **caractérisée en ce qu'**il existe au moins un capteur de distance mécanique (7) permettant de transmettre les valeurs de dimension de la fente (s) entre la pièce à usiner (4) et le plan d'appui (1) et/ou les valeurs correspondantes à l'aide d'un transformateur vers le système de contrôle et/ou **en ce que** le ou les capteur(s) de distance (7) transmet(tent) les signaux optiques, électriques et/ou acoustiques directement vers le système de contrôle ou après transformation vers le ou les moyen(s) d'ajustement afin de modifier la position (h) de l'axe de la lame inciseur (3, 3') par rapport au plan d'appui (1).

17. Scie circulaire selon une ou plusieurs des revendications précédentes 9 à 16, **caractérisée en ce que** la lame principale (2) et la lame inciseur (3, 3') sont fixées ou immobiles par rapport au plan d'appui (1) ou **en ce que** la lame principale (2) et la lame inciseur (3, 3') sont mobiles dans une direction longitudinale par rapport au plan d'appui (1).
